# EUROPEAN PATENT APPLICATION

(11) **EP 0 655 326 A1**
(43) Date of publication of application: **31.05.1995**
(21) Application number: 94118102.6
(22) Date of filing: 17.11.1994
(51) Int. Cl.: B32B 27/32, B65D 75/58

(54) **Material for easy-open flexible packages and a method for forming such packages**

(30) Priority: 29.11.1993 IT MI932508
(71) Applicant: TICINOPLAST S.r.l., I-21047 Saronno, Varese (IT)
(72) Inventor: Rossi, Paolo, I-20144 Milan (IT)
(74) Representative: Luksch, Giorgio, Dr.-Ing.

(57) **Abstract**

The base material is a coextrusion formed from at least two layers, one being a support layer of polyolefin (such as polyethylene or polypropylene) and the other a contact layer based on modified polyolefin, the contact layer, which has the property of easing the opening of the flexible package, having a softening point (VICAT point) less than that of the support layer. The flexible package is prepared with said material by welding it at different temperatures so as to eliminate the easy-open property of the contact layer in the longitudinal and base welds (and possibly in part of the mouth weld), while preserving this property in the total or remaining mouth weld.

## Description

This invention relates to a material in the form of film and a method of forming easy-open flexible packages. The material uses an already known modified polyolefin as its contact layer, which has the property of easing the package opening.

The requirement which the market currently places on producers of flexible packages for foods and other products is the availability of flexible packages of easy-open type, ie such that the final user is able to open the mouth of the flexible package (bag or envelope) without the aid of scissors or other implements.

Certain methods of constructing such easy-open flexible packages currently exist.

The general concept governing such flexible packages is to cause their mouth weld to open by a simple mutually outward pull exerted by the user's hand. This is made possible by the use of base materials in the form of plastics film formed for this purpose.

Easy opening is generally achieved by two methods, one known as "burst peel" in which the easy opening of the weld present at the mouth is achieved by breakage and simultaneous flaking of the surface layer of the weld-forming plastics film from the support layer or layers, and the other known as "easy peel" in which the easy opening of the weld is enabled by surface incompatibility of the weld-forming plastics film.

These two methods therefore derive from the use of two different families of constituent materials of the plastics layer by which the mouth of the flexible package is welded.

In the case of the burst peel method the material generally consists of a coextruded film comprising at least two layers of polyolefins and ionomers. This film is currently used in single component flexible packages (ie consisting only of the coextrusion) for containing for example dry food products based on cereals in the form of flakes, or in multi-layer packages in which for example they form easily removable lids for rigid trays.

The drawbacks encountered in packages formed from this material are as follows:
1. On opening the mouth of the flexible package an even light force applied by the user can easily also open the longitudinal and base welds present in the flexible package (envelope or bag) with imaginable consequences, such as the escape or dispersion of the contents. This drawback is obviated by inserting the flexible package in a cardboard box which limits the possible consequence, or by directly printing on the package a warning to exert only a small opening force. With materials of this category it is not possible to obtain longitudinal and base welds with a different mechanical strength, ie greater than that of the mouth.
2. On opening the mouth, fibres and/or particles of plastics film form, which can create undesirable contamination of the product contained in the package. This problem is related to the nature of the material involved in the breakage of the surface layer of the coextrusion.

In the case of the easy peel method, the materials used are single layer plastics film produced from polyolefin mixtures and additives of polybutylene, vinyl and butylacrylate type, or at least two-layer coextruded plastics film produced with layers of polyolefins and of polyolefins mixed with additives of polybutylene, vinyl and butylacrylate type, where the two layers have the same softening point, for example because both are of low density not exceeding 0.92.

Such film is currently used in single component packages or in multi-layer packages (for example for coffee or biscuit bags) in which other layers for example of aluminium and/or other layers of plastics type are joined to the two equal-melting layers.

The problem encountered in packages of this type (easy peel) is the same as that stated under point 1 in relation to the other package type. The other problem described under the preceding point 2 does not exist.

A method has recently become known directed towards eliminating the drawbacks of the two aforesaid methods. This method comprises spreading on the welding film in only the mouth region, and hence to a set extent, a coating which achieves the easy-open effect. The limit of this method is that the coating uses toluene as solvent with the negative environmental consequences deriving from this solvent, and making the use of such flexible packages problematic in the food field.

The main object of the present invention is to provide a material for forming flexible packages such as envelopes and bags which, while allowing easy opening of the package, which does not give rise to flaking and to breakage of the longitudinal and base welds on opening, this being achieved without the use of coatings and solvents to achieve easy opening.

A further object of the present invention is to provide a flexible package free of the drawbacks of traditional easy-open flexible packages, these drawbacks comprising the opening of welds other than that at the mouth and flaking on opening, without the need to use coatings and solvents to achieve easy opening.

These and further objects which will be more apparent from the detailed description given hereinafter are attained by the material, the method and the flexible package in accordance with the accompanying claims.

An essential aspect of the invention is a special coextrusion formed from a layer of high softening point polyolefins as support for a conventional layer of polyolefins mixed with additives of polybutylene, vinyl and butylacrylate type acting as the easy-open contact layer, the support layer having a softening point higher than that of the contact layer. In other words the VICAT point of the contact layer is less than the VICAT point of the support layer.

According to one aspect of the invention the softening point of the support layer can be about 15°C higher than that of the contact layer.

The method for producing flexible packages with the material of the invention comprises, for the package base and longitudinal welds, the use of a welding temperature at which there is at least a partial loss of the easy-open property of the contact layer, whereas for the partial or total mouth weld the temperature used is such as to maintain the contact layer substantially intact so as not to impede the easy opening of the mouth of the flexible package deriving from this contact layer. The higher softening point (higher VICAT point) of the support layer means that a temperature can be applied such as to make the contact layer substantially inactive for the purposes of easy opening, so that in practice the longitudinal and base welds are obtained between layers of polyolefins of higher softening point (higher VICAT point), ensuring a mechanical strength which prevents breakage on opening the package mouth.

The invention will be more apparent from the detailed description given hereinafter by way of non-limiting example with reference to the accompanying drawing, in which:
Figure 1 is a perspective view of a bag;
Figure 2 is a section on the line A-A with the thicknesses shown on an enlarged scale;
Figure 3 is a section on the line B-B and, for comparison with Figure 3,
Figure 4 shows a section on the line C-C;
Figure 5 is a schematic representation of an apparatus for forming an easy-open envelope.

Although the bag shown by way of example is of envelope type, the invention is also applicable to any other type of flexible package, such as those of for example multi-layer lateral bellows type.

The softening points indicated are those defined by the VICAT point.

The envelope-type bag shown is obtained from a plastics film formed from two coextruded layers 1 and 2 of thermoplastic materials. That indicated by 1, which is to lie on the outside of the bag, is formed from a polyolefin (polyethylene, polybutylene) and is hereinafter known as the "support layer". The polyolefin of the support layer is chosen such that the softening point is higher than that of the constituent material of the layer 2. For example the difference in the softening points of the two layers can be about 15°C or higher, or be reasonably about that value.

The layer 2, defined hereinafter as the contact layer, which is intended to line on the inside and performs the easy-open function, is conventional for this function and is formed from a polyolefin mixed with additives of polybutylene, vinyl and/or butylacrylate type. By way of example, the layer 1 can be of high density polyethylene (0.94), and the layer 2 can be of low density polyethylene, not exceeding 0.92, with the aforesaid additives.

The material of the contact layer is that already used in the easy peel materials cited at the beginning of the present text.

The bag comprises a base weld 3, a longitudinal weld 4 and, in correspondence with the mouth, a weld 5 performing the easy-open function.

The base weld region 3 is shown enlarged in Figure 4. It can be seen that there, as a result of a welding temperature higher than that at which the contact layer 2 preserves its operability, this latter is to be considered as practically disappeared by virtue of its having probably amalgamated with the support layer 1 which, being of polyolefin (for example high density polyolefin) of higher softening point, resists this temperature although physically undergoing transformation to form a stable weld with the identical transformed material which faces it. For this reason in the figure in question, in the welding region 4 the transformed material is indicated by 1+2, whereas on the left side, to which the thermal effects of the welding do not extend, the layers remain integral and are shown separately, each carrying its relative reference numeral (1 and 2).

That stated in relation to the base weld 3 is also valid for the longitudinal weld 4, where the connection obtained is again made in practice between polyolefins of higher softening point and is hence stable so as not to break when the envelope is opened, even if the force exerted exceeds that required for opening.

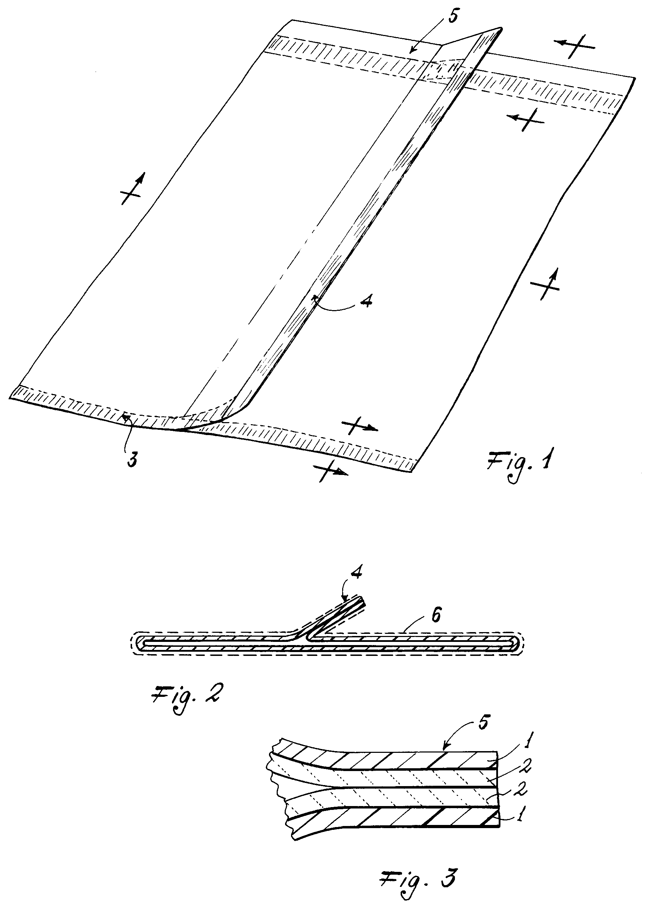

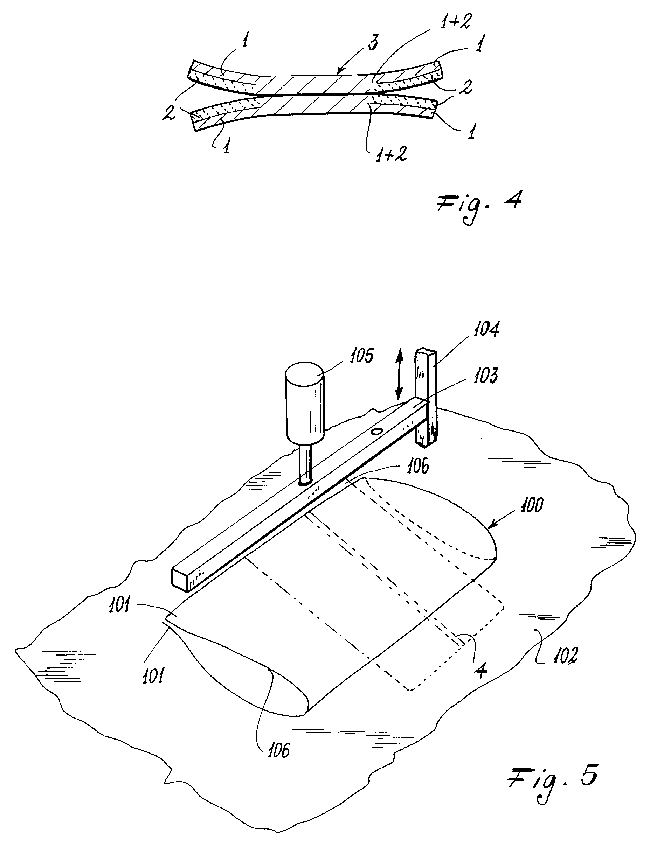

For the mouth weld the temperature used is lower so as to preserve the property of the layer 2 in performing the easy-open function, this being expressed in Figure 5 by the layers being shown separately, the joint being made in practice only between the layers 2.

The example shown relates to a two-layer coextrusion, it being apparent that this example is also valid for materials where the coextrusion is also bonded by conventional methods to other materials or layers (indicated by 6 in Figure 2), such as aluminium, polyolefins or polyesters, traditionally used for obtaining multi-layer flexible packages (for example for containing coffee).

The scope of the invention also embraces a coextrusion with more than two layers, provided the internal layers are equal to those described.

The technology of the invention is further illustrated hereinafter.

In the case of the material of the invention formed from the aforestated coextrusion, a coextrusion stage in the manner well known to the expert of the art is firstly effected to obtain a coextrusion having a thickness of between 40 and 100 µ, of which the contact layer 2 comprises 5-10µ. The coextrusion can be transparent or bulk coloured. It is wound onto a spool as usual and can be used as such or be firstly printed on its outer side (on the outside of the layer 1 in the case of the illustrated bag).

In the case of spools used as such, the spool is mounted on a conventional packaging machine where it is shaped and filled by traditional methods (the bag dimensions will obviously depend on the volume of the product which it is to contain).

Substantially, in traditional packaging machines the film unwinding from the spool is transformed into a tube by superimposing the edges and making a longitudinal weld using a temperature controlled welding bar movable away from and towards the tube, while at the same time making two spaced-apart transverse welds downstream by temperature controlled welding bars movable away from and towards the material to be welded and positioned in a direction perpendicular to the longitudinal welding bar. The more distant of the bars closes the mouth of the previous (downstream) bag, while the closer bar closes the base of the upstream bag. The upstream bag, the mouth of which is still open, is filled with the product (and vacuum possibly applied) after said welds have been made. After welding, a movable blade positioned between the transverse welding bars separates the full downstream bag from that being filled.

According to the invention, the bars which produce the longitudinal weld 4 and base weld 3 are temperature controlled at a temperature of 130-160°C. It should be noted that the particular value is to be chosen on the basis of parameters such as the thickness of the coextrusion and its composition and the speed of the packaging machine, and can be easily determined by simple tests to be carried out on bags obtained for test purposes so as to verify that opening the mouth weld 5 does not result in breakage or detachment of the layers at the other welds 3 and 4. The other welding bar making the mouth weld 5 is also temperature controlled but at a temperature of 90-120°C, the choice of the precise temperature being made experimentally on the basis of the aforesaid parameters and also checking on the test bags that the weld 5 obtained allows easy opening of the mouth by not destroying the corresponding properties of the contact layer 2.

If multi-layer flexible packages are to be constructed, ie those which besides comprising two coextruded base layers also comprise other outer layers as schematically indicated by 6 in Figure 2, after forming the coloured or non-coloured coextrusion in the indicated thicknesses a conventional bonding stage is carried out on layers of one or more other materials, such as aluminium, polyolefins or polyesters which represent traditional materials and are chosen on the basis of the use for which the flexible package is intended. From this combination a spool is obtained for mounting on the packaging machine, which effects the welds and fills the bags as indicated heretofore.

In the multi-layer case, the welds 3 and 4 are produced by electrically heated welding bars temperature controlled at 110-200°C (hence higher than in the preceding case) to take account of the greater thickness and the different gradient of the multi-layer material. The temperature adjustment depends in all cases on the factors indicated in the preceding case and on the basis of the required result.

The easy-open mouth weld 5 for the multi-layer case is made by welding bars temperature controlled at 100-160°C. Again in this case the optimum temperature is set experimentally on the basis of the factors indicated in the preceding case and on the basis of maintaining the easy-open characteristics for the contact layer 2.

In the aforegoing description reference has been made to industrial processing in packaging machines, but there is nothing to prevent the use of the inventive technology for producing the bag or other flexible packages on an artisan and/or manual basis by simply using one or more welding bars movable away from and towards the material to be welded, as illustrated on the accompanying schematic Figure 5, in which a coextruded sheet 100 according to the invention, such as that initially stated, is folded on a table or resting surface 102 to superimpose the longitudinal edges 101. An electrically heated and temperature controlled bar 103 is mounted movable perpendicular to the surface 102 along vertical guides 104 under the action of an actuator 105, for example hydraulic, valve-controlled by the operator.

The bar is temperature controlled at 130°C. The sheet 100 has a thickness of 50µ, of which 5µ relate to the contact layer (2 in Figure 1). The bar is lowered to obtain the longitudinal weld (4 in Figure 1).

The welding time is chosen by experience. In cases of this kind a couple of seconds are sufficient for eliminating the negative effect which the layer 2 has on the stability (strength) of the longitudinal weld.

The tube obtained in this manner is rotated through 90° from the aforedescribed position after moving the longitudinal weld 4 into an intermediate position so as to bring that region 106 of the tube which is to form its base below the the raised bar 103.

A weld is then made in the aforesaid manner to obtain the open-mouthed bag. A certain quantity of popcorn is then introduced through the mouth, which is then closed by offering it to the welding bar 103 the temperature of which has previously been set to 90°C, ie so as not to destroy those properties of the layer 2 which facilitate the opening of the bag. The bar is applied for about two seconds.

The bag is opened without excessive force. If the force is increased the bag tears but does not split at the longitudinal weld 4.

The invention also covers an embodiment in which easy opening is limited to only a portion of the mouth, the rest of the mouth remaining securely welded. This enables a flexible package to be obtained in which the mouth is opened to only a small extent allowing better control of the quantity of product dispensed at the moment of use.

For this purpose two welding bars are used to produce the weld 5, one at higher temperature (ie such as to nullify the easy-open property) and the other at lower temperature (ie such as to preserve the easy-open property).

## Claims

1. For flexible packages, a plastics film material formed from at least two coextruded layers, one being the contact layer consisting of modified polyolefinic plastics material possessing the property of easing the opening of the flexible package, characterised in that the other layer, for supporting the first, consists of polyolefin having a softening point higher than that of the contact layer.

2. A material as claimed in claim 1, characterised by having a thickness of between 40 and 100µ, of which the contact layer comprises 5-10µ.

3. A material as claimed in the preceding claims, characterised by being multi-layer and hence comprising, in addition to the coextrusion, other layers such as aluminium, polyolefins and polyesters.

4. A material as claimed in one or more of the preceding claims, characterised in that the softening points of the two layers differ by about 15°C or more.

5. A material as claimed in one or more of claims 1, 2 and 3, characterised in that the support layer is of high density (0.94) polyolefin, whereas the contact layer is of low density (not exceeding 0.92) modified polyolefin.

6. A method for making flexible packages from thermoweldable materials in accordance with one or more of the preceding claims, said packages being provided with a transverse base weld, a longitudinal weld and a transverse mouth weld, characterised in that the base and longitudinal weld and possibly part of the mouth weld are effected at a temperature such as to nullify the easy-open properties of the contact layer, whereas the remaining or total mouth weld is effected at a lower temperature such as to preserve the easy-open properties of the contact layer.

7. A method as claimed in claim 6, characterised in that the welds are effected by welding bars, those provided for the longitudinal weld, base weld and possibly part of the mouth weld being controlled at a temperature which:
a) lies between 130 and 160°C if the flexible package consists only of the coextrusion;
b) lies between 140 and 200°C if the flexible package consists of multi-layer material
whereas the bar provided for partly or totally welding the mouth is controlled at a temperature which:
a1) lies between 90 and 120°C if the flexible package consists only of the coextrusion;
b1) lies between 100 and 160°C if the flexible package consists of multi-layer material.

8. A flexible package consisting of a bag or envelope comprising a coextrusion in accordance with claim 1, characterised in that in the base weld and longitudinal weld the connection is essentially formed by the support layer.
